# EUROPEAN PATENT SPECIFICATION

(11) **EP 3 772 834 B1**
(45) Date of publication and mention of the grant of the patent: **17.05.2023**
(21) Application number: 20188728.8
(22) Date of filing: 30.07.2020
(51) Int. Cl.: H04L 41/147, H04L 41/16, H04L 41/40, H04L 41/0631

(54) **A METHOD OF PREDICTING THE TIME COURSE OF A PLURALITY OF DATA RELATIVE TO A TELEPHONY INFRASTRUCTURE FOR NETWORK FUNCTION VIRTUALIZATION**
VERFAHREN ZUR VORHERSAGE DES ZEITVERLAUFS EINER VIELZAHL VON DATEN IN BEZUG AUF EINE FERNSPRECHINFRASTRUKTUR ZUR VIRTUALISIERUNG DER NETZWERKFUNKTION
PROCÉDÉ DE PRÉDICTION DE L'ÉVOLUTION TEMPORELLE D'UNE PLURALITÉ DE DONNÉES PAR RAPPORT À UNE INFRASTRUCTURE DE TÉLÉPHONIE POUR LA VIRTUALISATION DE FONCTIONS DE RÉSEAU

(30) Priority: 07.08.2019 IT 201900014262
(43) Date of publication of application: 10.02.2021
(73) Proprietor: Vodafone Italia S.p.A., 10015 Ivrea (TO) (IT)
(72) Inventor: Cucinotta, Tommaso, 56127 Pisa PI (IT); Vannucci, Marco, 56127 Pisa PI (IT); Ritacco, Antonio, 56127 Pisa PI (IT); Lanciano, Giacomo, 56127 Pisa PI (IT); Artale, Antonino, 10015 Ivrea TO (IT); Barata, Joao, 10015 Ivrea TO (IT); Sposato, Enrica, 10015 Ivrea TO (IT)
(74) Representative: Perani & Partners S.p.A.

(56) References cited:
- US-A1- 2018 246 746
- ZHIJING LI ET AL: "Predictive Analysis in Network Function Virtualization", ICM '18: PROCEEDINGS, 1 October 2018 (2018-10-01), pages 161-167, XP055677650, 2 Penn Plaza, Suite 701New YorkNY10121-0701USA DOI: 10.1145/3278532.3278547 ISBN: 978-1-4503-5619-0
- "Experiential Networked Intelligence (ENI); ENI use cases", ETSI DRAFT SPECIFICATION; ENI 001, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. ISG ENI Experiential Networked Intelligence, no. V2.0.10 11 July 2019 (2019-07-11), pages 1-89, XP014346846, Retrieved from the Internet: URL:docbox.etsi.org/ISG/ENI/70-Draft/008/E NI-008v2010/ENI-008v2010_rev_marks.docx [retrieved on 2019-07-11]

## Description

### Technical field

The present invention relates to a method of predicting the time course of a plurality of data relative to a telephony infrastructure for Network Function Virtualization. This method is particularly used in connection with the management operations of telephony infrastructure.

### State of the background art

Infrastructures for Network Function Virtualization (NFV infrastructures) are known in the literature. In particular, the term Network Function Virtualization refers to an architectural approach which leverages information technologies to virtualize network services. That is, the term Network Function Virtualization refers to a network approach which allows to replace hardware devices such as routers and firewalls with network applications which are software-based and function as virtual machines on standard servers. The term Network Function Virtualization also refers to lightweight virtualization methods such as those at the operating system level, also called container systems.

In more detail, through the NFV infrastructure, network features become software applications called virtual network functions (VNFs) which can be instantiated on a server. That is, the VNFs are implemented within the NFV infrastructure in the form of software which runs within different virtual machines.

NFV infrastructure management operations such as analysis, prediction and planning are also known. Such operations are of the utmost importance in order to allow the optimal functioning of the infrastructure, avoiding malfunctions of the infrastructure causing errors in the transmission of information. For example, the creation of specific algorithms to predict the future behavior of an NFV infrastructure falls within this perspective.

Examples of NFV infrastructure management methods are shown in the documents "ZHIJING LI ET AL: Predictive Analysis in Network Function Virtualization" and "US20180246746A1".

Document "Experimental Networked Intelligence (ENI); ENI use cases" (ETSI DRAFT SPECIFICATION; ENI 001, EUROPEAN TELECOMMUNICATIONS STANDARDS INSTITUTE (ETSI), 650, ROUTE DES LUCIOLES; F-06921 SOPHIA-ANTIPOLIS; FRANCE) provides guide lines for using machine learning technique for the automation of network infrastructure management operations for an operator.

### Problems of the background art

The algorithms developed by NFV infrastructure operators are often affected by programming errors. These errors have an impact on infrastructure management operations. That is, an incorrect prediction of the future behavior of an NFV infrastructure may lead to errors in evaluating the course of the infrastructure. Such evaluation errors may lead to a failure to detect possible future infrastructure malfunctions and anomalies. Consequently, the algorithms of the background art do not permit reliable management of the infrastructure.

### Summary of the invention

In this context, the technical task underlying the present invention is to provide a method for predicting the time course of a plurality of data relative to a telephony infrastructure for Network Function Virtualization which overcomes the drawbacks of the background art.

In particular, an object of the present invention is to propose a method which allows to detect any future malfunctions and anomalies in a telephony infrastructure for Network Function Virtualization.

The mentioned technical task and the specified objects are substantially achieved by a method for predicting the time course of a plurality of data relative to a telephony infrastructure for Network Function Virtualization comprising the technical specifications set out in one or more of the appended claims.

### Advantages of the invention

Thanks to a preferred embodiment of the invention it is possible to effectively predict the time course of an NFV infrastructure. Consequently, from the analysis of the time course of the NFV infrastructure it is possible to reliably predict possible future malfunctions and anomalies of the infrastructure.

### BRIEF DESCRIPTION OF THE DRAWINGS

Further characteristics and advantages of the present invention will become more apparent from the exemplary, and therefore non-limiting, description of a preferred but not exclusive embodiment of a method for predicting the time course of a plurality of data relative to a telephony infrastructure for Network Function Virtualization, as illustrated in the appended drawings, in which:

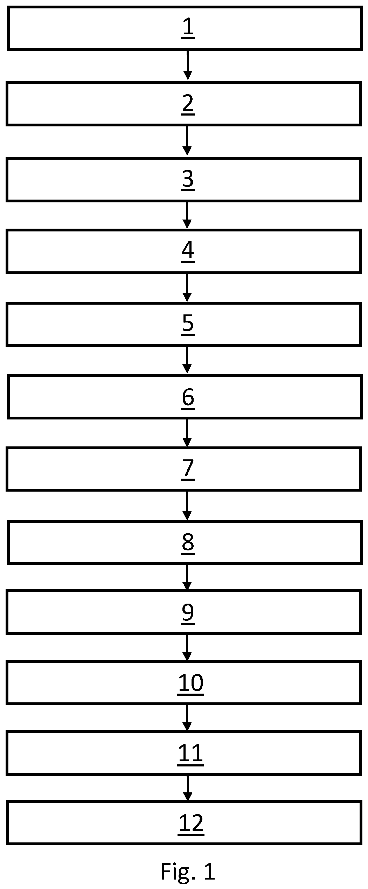

- Figure 1 is a schematic representation of the order of the main steps of the method.

### DETAILED DESCRIPTION

The present invention relates to a method of predicting the time course of a plurality of data relative to a telephony infrastructure for Network Function Virtualization.

This method comprises the step of providing 1 a first database containing historical telephony infrastructure monitoring data concerning the level of use of the telephony infrastructure resources and/or any error conditions or anomalies occurred therein. Historical telephony infrastructure monitoring data comprise, for example, the level of use of the processor, disk, network, and memory. These historical telephony infrastructure monitoring data are relative to a predetermined time horizon.

The method further comprises the step of providing 2 a second database containing historical telephony infrastructure application monitoring data concerning the level of use of the telephony infrastructure application, its performance or reliability and/or any error conditions or anomalies occurred therein. Historical telephony infrastructure application monitoring data comprise, for example, data measuring the number of registered users, the number of sessions, the number of requests received, the number and type of errors encountered, latency statistics, or incorrect request rates due to multiple factors. These historical telephony infrastructure application monitoring data are relative to the same predetermined time horizon as the historical telephony infrastructure monitoring data.

In addition, the method comprises the step of providing 3 a control unit in signal communication with the first and second databases.

The method also comprises the step of providing 4 an automatic learning mechanism such as, for example, a neural network or an advanced machine learning mechanism. Preferably, the method comprises the step of providing a Long-Short Term Memory (LSTM network) type neural network or a Nonlinear Autoregressive with Exogenous Input (NARX network) type machine learning mechanism or, alternatively, of the Support-Vector Machine for regression (SVR network) type. LSTM, NARX or SVR methodologies are known per se to the person skilled in the art and will not be described herein for this reason.

Next, the method comprises the step of extrapolating 5, by the control unit, at least one first subset of historical data from the historical telephony infrastructure monitoring data and/or from the historical telephony infrastructure application monitoring data. For example, the method comprises the step of extrapolating by the control unit at least one first subset of historical data from the first database. Alternatively, the method comprises the step of extrapolating by the control unit at least one first subset of historical data from the second database. Still for example, the method comprises the step of extrapolating at least one first subset of historical data from the historical telephony infrastructure monitoring data contained in the first database and at least one first subset of historical data from the historical telephony infrastructure application monitoring data contained in the second database. The first subset of historical data is relative to a first predetermined time window. Preferably, each first extrapolated subset of historical data is relative to the first predetermined time window. Still preferably, the first predetermined time window corresponds to one week of the predetermined time horizon.

The method then comprises the step of extrapolating 6, by the control unit, at least one second subset of historical data from the historical telephony infrastructure monitoring data and/or from the historical telephony infrastructure application monitoring data. For example, the method comprises the step of extrapolating by the control unit at least one second subset of historical data only from the historical telephony infrastructure monitoring data or the method comprises the step of extrapolating by the control unit at least one second subset of historical data only from the historical telephony infrastructure application monitoring data. Still for example, the method comprises the step of extrapolating at least one second subset of historical data from the historical telephony infrastructure monitoring data and at least one second subset of historical data from the historical telephony infrastructure application monitoring data. The second subset of historical data is relative to a second predetermined time window. Preferably, each second extrapolated subset of historical data is relative to the second predetermined time window. Still preferably, the second predetermined time window corresponds to one week of the predetermined time horizon.

Additionally, the method comprises the step of defining 7, by the control unit, a historical input vector comprising the historical data of the first subset of historical data. Preferably, the historical input vector comprises the historical data of each first subset of historical data extrapolated in the previous steps.

The method also comprises the step of defining 8, by the control unit, a historical output vector comprising the historical data of the second subset of historical data. Preferably, the historical output vector comprises the historical data of each second subset of historical data extrapolated in the previous steps.

Next, the method comprises the step of training 9, by the control unit, the automatic learning mechanism to obtain, at its output, the historical output vector by providing the historical input vector at the input of the automatic learning mechanism. That is, the automatic learning mechanism is trained to provide the historical data relative to the second predetermined time window when the historical data relative to the first predetermined time window is provided in input.

After the step of training 9 the automatic learning mechanism, the method comprises the step of acquiring 10, by the control unit, at least one subset of current telephony infrastructure monitoring data and/or telephony infrastructure application monitoring data. These current data are relative to a current time window. Preferably, such current data is acquired in real time. Alternatively, such current data comprises a concatenation of current data acquired in real time and historical data.

In addition, the method comprises the step of defining 11 a current input vector comprising such subset of current data.

After the step of defining 11 a current input vector, the method comprises the step of providing 12 the current input vector at the input of the trained automatic learning mechanism to obtain a prediction output vector. The prediction output vector comprises a plurality of prediction telephony infrastructure monitoring data and/or telephony infrastructure application monitoring data. These prediction data represent the time course of the current data provided as input to the automatic learning mechanism. That is, such prediction data are relative to a prediction time window.

It should be noted that the relationship between the current time window and the prediction time window corresponds to the relationship between the first and second predetermined time windows.

The step of extrapolating 5, by the control unit, at least one first subset of historical data and the step of extrapolating 6, by the control unit, at least one second subset of historical data comprise the subset of applying a data selection algorithm to identify at least one first and/or at least one second optimal subset of historical data to be provided to the automatic learning mechanism.

Advantageously, the identification of at least one first and/or at least one second optimal subset of historical data improves the accuracy and effectiveness of automatic learning mechanism training. In fact, the identification of at least one first and/or at least one second optimal subset of historical data prevents the automatic learning mechanism from being trained using a first and/or second subset of historical data incompatible with such automatic learning mechanism. Indeed, the use of a first and/or second subset of historical data incompatible with the automatic learning mechanism may result in erroneous learning for the automatic learning mechanism and, consequently, obtaining untrue predictions about current data.

Furthermore, the application of a data selection algorithm, i.e., feature selection techniques, allows to identify at least one first and/or at least one second optimal subset of historical data of limited size, ensuring an improvement in the performance of the automatic learning mechanism thanks to the reduced complexity of such automatic learning mechanism once trained.

In addition, the step of extrapolating 5, by the control unit, at least one first subset of historical data and the step of extrapolating 6, by the control unit, at least one second subset of historical data comprise the sub-step of applying at least one algebraic transformation operation to the historical data of the first and/or second subset of historical data. For example, the algebraic transformation may be polynomial or even linear.

Advantageously, the application of at least one algebraic transformation operation to the historical data increases the efficiency of the automatic learning mechanism and at the same time speeds up the training step of the automatic learning mechanism. In addition, the application of at least one algebraic transformation operation to the historical data allows for more accurate training of the automatic learning mechanism.

According to a first embodiment of the invention, the step of extrapolating 6, by the control unit, at least one second subset of historical data from the historical telephony infrastructure monitoring data and/or from the historical telephony infrastructure application monitoring data comprises the step of selecting, by the control unit, a second subset of historical data relative to the second predetermined time window. This second predetermined time window is distinct from the first predetermined time window. That is, according to the first embodiment of the invention, the first and second predetermined time windows may be contiguous with each other or may be spaced apart from each other by a prediction time interval. For example, the first predetermined time window may correspond to one week of the predetermined time horizon, and the second predetermined time window may correspond to the subsequent week of the predetermined time horizon. Still for example, the first and second predetermined time windows may be spaced apart by a prediction time interval value of one month.

Thanks to an automatic learning mechanism trained in accordance with the first embodiment of the invention, providing at the input of the trained automatic learning mechanism a plurality of current data relative to the current time window, it is possible to obtain a plurality of prediction data relative to a contiguous prediction time window or spaced from the current time window of the prediction time interval value. That is, it is therefore possible to obtain predictions about the future behavior of the telephony infrastructure. In fact, for example, thanks to an automatic learning mechanism trained according to the first embodiment of the invention it is possible to obtain prediction telephony infrastructure monitoring data from current telephony infrastructure application monitoring data. Advantageously, it is therefore possible to assess whether the traffic of the telephony infrastructure evolves according to the observed trend in order to identify possible critical situations of lack of hardware resources within a time horizon of a few weeks or months. Thanks to an automatic learning mechanism trained according to the first embodiment of the invention it is possible to obtain predictive telephony infrastructure application monitoring data from current telephony infrastructure monitoring data. Advantageously, it is therefore possible to predict how any growth trends in resource utilization may influence infrastructure performance indicators in the near future.

According to a second embodiment of the invention alternative to the first embodiment, the step of extrapolating 6, by the control unit, at least one second subset of historical data from the historical telephony infrastructure monitoring data and/or from the historical telephony infrastructure application monitoring data comprises the step of selecting, by the control unit, a second subset of historical data relative to the second predetermined time window. This second predetermined time window is at least partially overlapping the first predetermined time window. More preferably, this second predetermined time window is overlapping the first predetermined time window.

Thanks to an automatic learning mechanism trained according to the second embodiment of the invention, it is possible to predict how the prediction data is modified based on the current data provided as input to the automatic learning mechanism. That is, it is possible to predict how the prediction data is modified by transforming the current data provided as input to the automatic learning mechanism in accordance with how such current data are expected to change under particular hypothetical conditions. Preferably, the current data provided as input to the automatic learning mechanism may be transformed by a generic algebraic transformation, for example polynomial or even linear.

In accordance with a first feature of the invention, the sub-step of applying a data selection algorithm to locate at least one first and/or at least one second optimal subset of historical data to be provided to the automatic learning mechanism comprises the step of applying, by the control unit, a genetic type algorithm to identify at least one first and/or at least one second optimal subset of historical data to be provided to the automatic learning mechanism.

Preferably, the genetic type algorithm comprises the step of defining a population of random subsets of input variables, to which a score is assigned based on the training error obtained by training an automatic learning mechanism starting from a population of first and/or second subsets of historical data. Subsequently, the genetic type algorithm comprises the step of discarding a predetermined number of elements of the population with higher error training and combining randomly selected pairs of elements of the population with lower error training using a cross-over function and generating further elements by applying a mutation function to a low percentage of randomly sampled elements of the population, so as to restore a population of elements of predetermined size. The genetic type algorithm therefore comprises the step of repeating for a predetermined number of iterations the process of evaluating the training error for the elements of the new population, the application of the cross-over function and the mutation function. At the end of repeating the predetermined number of iterations, the first and/or second subsets of historical data to be used to train the automatic learning mechanism are those with the best scores.

In accordance with a second feature of the invention alternative to the first feature of the invention, the sub-step of applying a data selection algorithm to identify at least one first and/or at least one second optimal subset of historical data to be provided to the automatic learning mechanism comprises the step of defining, by the control unit, a predetermined number of iterations.

In addition, again in accordance with second feature of the invention, the sub-step of applying a data selection algorithm to identify at least one first and/or at least one second optimal subset of historical data to be provided to the automatic learning mechanism comprises the step of repeating, by the control unit, a genetic type algorithm for the predetermined number of iterations, to identify a first and/or a second optimal subset of historical data for each iteration.

Finally, again in accordance with the second feature of the invention, the sub-step of applying a data selection algorithm to identify at least one first and/or at least one second optimal subset of historical data to be provided to the automatic learning mechanism comprises the step of selecting at least one first and/or at least one second subset of historical data among the subsets of historical data identified in the previous step. Preferably, the sub-step of applying a data selection algorithm to identify at least one first and/or at least one second optimal subset of historical data to be provided to the automatic learning mechanism comprises the step of selecting the first and/or second subsets of historical data most present among those obtained in the previous step.

According to a preferred embodiment of the invention, before the step of defining 7, by the control unit, a historical input vector and before the step of defining 8, by the control unit, a historical output vector, the method comprises the step of defining, by the control unit, a first time interval for acquisition of the historical telephony infrastructure monitoring data of the first and second subsets of historical data. This first acquisition time interval represents the time frame for acquiring historical telephony infrastructure monitoring data.

In addition, before the step of defining 7, by the control unit, a historical input vector and before the step of defining 8, by the control unit, a historical output vector, the method comprises the step of defining, by the control unit, a second time interval for acquisition of the historical telephony infrastructure application monitoring data of the first and second subsets of historical data. This second acquisition time interval represents the time frame for acquiring historical telephony infrastructure application monitoring data.

Furthermore, before the step of defining 7, by the control unit, a historical input vector and before the step of defining 8, by the control unit, a historical output vector, the method comprises the step of defining, by the control unit, the maximum acquisition time interval between the first and second acquisition time intervals.

Before the step of defining 7, by the control unit, a historical input vector and before the step of defining 8 by the control unit a historical output vector, the method comprises the step of aggregating the historical data of the first and second subsets of historical data based on the maximum acquisition time interval to obtain aggregated historical data.

The step of aggregating the historical data of the first and second subsets of historical data based on the maximum acquisition time interval to obtain aggregated historical data comprises the sub-step of identifying, by the control unit, a plurality of first time points in the first predetermined time window. These first time points are spaced apart by the value of the maximum acquisition time interval.

The step of aggregating the historical data of the first and second subsets of historical data based on the maximum acquisition time interval to obtain aggregated historical data also comprises the sub-step of identifying, by the control unit, a plurality of second time points in the second predetermined time window. These second time points are spaced apart by the value of the maximum acquisition time interval.

In addition, the step of aggregating the historical data of the first and second subsets of historical data based on the maximum acquisition time interval to obtain aggregated historical data comprises the sub-step of associating, by the control unit, each historical data of the first subset of historical data with a respective first time point and each historical data of the second subset of historical data with a respective second time point to define aggregated historical data.

Preferably, before the step of defining 7, by the control unit, a historical input vector and before the step of defining 8, by the control unit, a historical output vector, the method comprises the step of defining, by the control unit, a maximum time window. Preferably, the maximum time window value is chosen based on the value of the maximum acquisition time interval. The maximum time window value is greater than the maximum acquisition time interval.

Following the step of defining, by the control unit, a maximum time window value, the method comprises the step of defining, by the control unit, for each pair of consecutive aggregated historical data of the first subset of historical data a first separation time window. This first separation time window is included between the first time points associated with the aggregated historical data of the pair of consecutive aggregated historical data of the first subset of historical data. That is, the method comprises the step of defining the value of the first separation time window for aggregated historical data of the first subset of historical data associated with first consecutive time points. If the first separation time window coincides with the maximum acquisition time interval, such first separation time window does not contain any first time point defined by the control unit. Conversely, if the first separation time window is greater than the maximum acquisition time interval, such first separation time window contains at least one first time point having no aggregated historical data of the first subset of historical data associated therewith.

Following the step of defining, by the control unit, a maximum time window value, the method also comprises the step of defining, by the control unit, for each pair of consecutive aggregated historical data of the second subset of historical data a second separation time window . This second separation time window is included between the second time points associated with the aggregated historical data of the pair of consecutive aggregated historical data of the second subset of historical data. That is, the method comprises the step of defining the value of the second separation time window for aggregated historical data of the second subset of historical data associated with second consecutive time points. If the second separation time window coincides with the maximum acquisition time interval, such second separation time window does not contain any second time point defined by the control unit. Conversely, if the second separation time window is greater than the maximum acquisition time interval, such second separation time window contains at least one second time point having no aggregated historical data of the second subset of historical data associated therewith.

Thereafter, the method comprises the step of checking, by the control unit, for each of the first and second separation time windows defined, if the duration of such separation time window is at least equal to or higher than the maximum time window value.

Next, the method comprises the step of defining, by the control unit, a first reliable time window by excluding from the first predetermined time window each first separation time window whose duration is at least equal to or greater than the maximum time window value. That is, the first reliable time window contains only the first separation time windows whose duration is shorter than the maximum time window. Advantageously, the method allows to exclude from the first predetermined time window the first separation time windows considered unreliable. The method then allows to exclude from the first predetermined time window the first separation time windows comprising a plurality of first time points having no aggregated historical data of the first subset of historical data associated therewith. The number of such plurality of first time points having no aggregated historical data of the first subset of historical data associated therewith is defined by the value of the maximum time window.

In addition, the method comprises the step of defining, by the control unit, a second reliable time window by excluding from the second predetermined time window each second separation time window whose duration is at least equal to or greater than the maximum time window value. That is, the second reliable time window contains only the second time separation windows whose duration is shorter than the maximum time window. Advantageously, the method allows to exclude from the second predetermined time window the second separation time windows considered unreliable. The method then allows to exclude from the second predetermined time window the second separation time windows comprising a plurality of second time points having no aggregated historical data of the second subset of historical data associated therewith. The number of such plurality of second time points having no aggregated historical data of the second subset of historical data associated therewith is defined by the value of the maximum time window.

It should be noted that a first reliable time window for each defined first subset of historical data and a second reliable time window for each defined second subset of historical data are defined in this manner.

In accordance with the preferred embodiment of the invention, following the steps of defining a first and a second reliable time windows, the method comprises the step of checking, by the control unit, if each first separation time window of the first reliable time window comprises one or more first time points having no aggregated historical data of the first subset of historical data associated therewith.

Following the steps of defining a first and a second reliable time windows, the method also comprises the step of checking, by the control unit, if each second separation time window of the second reliable time window comprises one or more second time points having no aggregated historical data of the second subset of historical data associated therewith.

Subsequently, the method comprises the step of interpolating, by the control unit the aggregated historical data of the first subset of historical data to define a first interpolated data to be associated with each first time point of the first reliable time window having no aggregated historical data of the first subset of historical data associated therewith. For example, the step of interpolating, by the control unit, the aggregated historical data of the first subset of historical data comprises the sub-step of defining for each first time point of the first reliable time window having no aggregated historical data of the first subset of historical data associated therewith the respective first previous time point and the respective first subsequent time point. Next, the step of interpolating, by the control unit, the aggregated historical data of the first subset of historical data comprises the sub-step of defining the first interpolated data for each first time point of the reliable time window having no aggregated historical data of the first subset of historical data associated therewith. This first interpolated data results from the interpolation of the aggregated historical data of the first subset associated with the respective previous time point and the aggregated historical data of the first subset associated with the respective subsequent time point.

In addition, the method comprises the step of interpolating, by the control unit, the aggregated historical data of the second subset of historical data to define a second interpolated data to be associated with each second time point of the second reliable time window having no aggregated historical data of the second subset of historical data associated therewith. For example, the step of interpolating, by the control unit, the aggregated historical data of the second subset of historical data comprises the sub-step of defining for each second time point of the second reliable time window having no aggregated historical data of the second subset of historical data associated therewith the respective second previous time point and the respective second subsequent time point. Next, the step of interpolating, by the control unit, the aggregated historical data of the second subset of historical data comprises the sub-step of defining the second interpolated data for each second time point of the reliable time window having no aggregated historical data of the second subset of historical data associated therewith. This second interpolated data results from the interpolation of the aggregated historical data of the second subset associated with the respective second previous time point and the aggregated historical data of the second subset associated with the respective second subsequent time point.

In accordance with the preferred embodiment of the invention, before the step of defining 7, by the control unit, a historical input vector and before the step of defining 8, by the control unit, a historical output vector, the method comprises the step of normalizing, by the control unit, the aggregated historical data of the first and second subsets of historical data. Preferably, the step of normalizing, by the control unit, the aggregated historical data of the first and second subsets of historical data comprises the step of applying a standardization technique or a minimum-to-maximum normalization technique to the aggregated historical data.

Still in accordance with the preferred embodiment of the invention, the step of acquiring 10, by the control unit, at least one subset of current telephony infrastructure monitoring data and/or telephony infrastructure application monitoring data comprises the sub-step of applying the data selection algorithm to identify an optimal subset of current data to be provided to the automatic learning mechanism. It should be noted that what is described with reference to the sub-step of applying the data selection algorithm to identify at least one first and/or at least one second optimal subset of historical data to be provided to the automatic learning mechanism also applies to the sub-step of applying the data selection algorithm to identify an optimal subset of current data to be provided to the automatic learning mechanism.

In addition, the acquisition step 10 comprises the sub-step of applying at least one algebraic transformation operation to the current data of the subset of current data.

Advantageously, the identification of an optimal subset of current data and the application of at least one algebraic transformation operation to the current data allows to provide the automatic learning mechanism with the same type of data provided during training, thereby ensuring an optimal functioning of the automatic learning mechanism.

## Claims

1. A method of predicting the time course of a plurality of data relative to a telephony infrastructure for Network Function Virtualization, said method comprising the steps of:
- providing (1) a first database containing historical telephony infrastructure monitoring data concerning the level of use of the telephony infrastructure resources and/or any error conditions or anomalies occurred therein;
- providing (2) a second database containing historical telephony infrastructure application monitoring data concerning the level of use of the telephony infrastructure application, its performance or reliability and/or any error conditions or anomalies occurred therein;
- providing (3) a control unit in signal communication with the first and second databases;
- providing (4) an automatic learning mechanism;
- extrapolating (5), by the control unit, at least one first subset of historical data from said historical telephony infrastructure monitoring data and/or from said historical telephony infrastructure application monitoring data, said first subset of historical data being relative to a first predetermined time window;
- extrapolating (6), by the control unit, at least one second subset of historical data from said historical telephony infrastructure monitoring data and/or from said historical telephony infrastructure application monitoring data, said second subset of historical data being relative to a second predetermined time window;
- defining (7), by the control unit, a historical input vector comprising the historical data of the first subset of historical data;
- defining (8), by the control unit, a historical output vector comprising the historical data of the second subset of historical data;
- training (9), by the control unit, the automatic learning mechanism to obtain, at its output, the historical output vector by providing the historical input vector at the input of the automatic learning mechanism;
- acquiring (10), by the control unit, at least one subset of current telephony infrastructure monitoring data and/or telephony infrastructure application monitoring data, said current data being relative to a current time window;
- defining (11) a current input vector comprising said subset of current data;
- providing (12) the current input vector at the input of the trained automatic learning mechanism to obtain a prediction output vector;
said method being **characterized in that** the step of extrapolating (5), by the control unit, at least one first subset of historical data and the step of extrapolating (6), by the control unit, at least one second subset of historical data comprises the subsets of:
- applying a data selection algorithm to identify at least one first and/or at least one second optimal subset of historical data to be provided to the automatic learning mechanism;
- applying at least one algebraic transformation operation to the historical data of the first and/or second subset of historical data;
- wherein the sub-step of applying a data selection algorithm to identify at least one first and/or at least one second optimal subset of historical data to be provided to the automatic learning mechanism comprises:
- the sub-step of:
- applying, by the control unit, a genetic type algorithm to identify at least one first and/or at least one second optimal subset of historical data to be provided to the automatic learning mechanism; or
- the sub-steps of:
- defining, by the control unit, a predetermined number of iterations;
- repeating, by the control unit, a genetic type algorithm for the predetermined number of iterations, to identify a first and/or a second optimal subset of historical data for each iteration;
- selecting at least one first and/or at least one second subset of historical data among the subsets of historical data identified in the previous step.

2. A method as claimed in claim 1, wherein the step of extrapolating (6), by the control unit, at least one second subset of historical data from said historical telephony infrastructure monitoring data and/or from said historical telephony infrastructure application monitoring data comprises the step of:
- selecting, by the control unit, a second subset of historical data relative to the second predetermined time window, said second predetermined time window being distinct from the first predetermined time window.

3. A method as claimed in claim 1, wherein the step of extrapolating (6), by the control unit at least one second subset of historical data from said historical telephony infrastructure monitoring data and/or from said historical telephony infrastructure application monitoring data comprises the step of:
- selecting, by the control unit, a second subset of historical data relative to the second predetermined time window, said second predetermined time window at least partially overlapping the first predetermined time window.

4. A method as claimed in any of claims 1 to 3, wherein before the step of defining (7), by the control unit, a historical input vector and before the step of defining (8), by the control unit, a historical output vector, said method comprises the steps of:
- defining, by the control unit, a first time interval for acquisition of the historical telephony infrastructure monitoring data of the first and second subsets of historical data;
- defining, by the control unit, a second time interval for acquisition of the historical telephony infrastructure application monitoring data of the first and second subsets of historical data;
- defining, by the control unit, the maximum acquisition time interval between the first and second acquisition time intervals;
- aggregating the historical data of the first and second subsets of historical data based on the maximum acquisition time interval to obtain aggregated historical data.

5. A method as claimed in claim 4, wherein the step of aggregating the historical data of the first and second subsets of historical data, based on the maximum acquisition time interval to obtain aggregated historical data comprises the sub-steps of:
- identifying, by the control unit, a plurality of first time points in the first predetermined time window, said first time points being spaced apart by the value of the maximum acquisition time interval;
- identifying, by the control unit, a plurality of second time points in the second predetermined time window, said second time points being spaced apart by the value of the maximum acquisition time interval;
- associating, by the control unit, each historical data of the first subset of historical data with a respective first time point and each historical data of the second subset of historical data with a respective second time point to define aggregated historical data.

6. A method as claimed in claim 4 or 5, wherein before the step of defining (7), by the control unit, a historical input vector and before the step of defining (8), by the control unit, a historical output vector, said method comprises the steps of:
- defining, by the control unit, a maximum time window;
- defining, by the control unit, for each pair of consecutive aggregated historical data of the first subset of historical data, a first separation time window, said first separation time window being included between the first time points associated with the aggregated historical data of the pair of consecutive aggregated historical data of the first subset of historical data;
- defining, by the control unit, for each pair of consecutive aggregated historical data of the second subset of historical data a second separation time window, said second separation time window being included between the second time points associated with the aggregated historical data of the pair of consecutive aggregated historical data of the second subset of historical data;
- checking, by the control unit, for each of the first and second separation time windows defined, if the duration of such separation time window is at least equal to or higher than the maximum time window value;
- defining, by the control unit, a first reliable time window by excluding from the first predetermined time window each first separation time window whose duration is at least equal to or greater than the maximum time window value;
- defining, by the control unit, a second reliable time window by excluding from the second predetermined time window each second separation time window whose duration is at least equal to or greater than the maximum time window value.

7. A method as claimed in claim 6, wherein before the step of defining (7), by the control unit, a historical input vector and before the step of defining (8), by the control unit, a historical output vector, said method comprises the steps of:
- checking, by the control unit, if each first separation time window of the first reliable time window comprises one or more first time points having no aggregated historical data of the first subset of historical data associated therewith;
- checking, by the control unit, if each second separation time window of the second reliable time window comprises one or more second time points having no aggregated historical data of the second subset of historical data associated therewith;
- interpolating, by the control unit, the aggregated historical data of the first subset of historical data to define a first interpolated data to be associated with each first time point of the first reliable time window having no aggregated historical data of the first subset of historical data associated therewith;
- interpolating, by the control unit, the aggregated historical data of the second subset of historical data to define a second interpolated data to be associated with each second time point of the second reliable time window having no aggregated historical data of the second subset of historical data associated therewith.

8. A method as claimed in any of claims 4 to 7, wherein before the step of defining (7), by the control unit, a historical input vector and before the step of defining (8), by the control unit, a historical output vector, said method comprises the step of:
- normalizing, by the control unit, the aggregated historical data of the first and second subsets of historical data.

9. A method as claimed in any of claims 1 to 8, wherein the step of acquiring (10), by the control unit, at least one subset of current telephony infrastructure monitoring data and/or telephony infrastructure application monitoring data comprises the sub-steps of:
- applying the data selection algorithm to identify an optimal subset of current data to be provided to the automatic learning mechanism;
- applying at least one algebraic transformation operation to the current data of the subset of current data.

## Patentansprüche

1. Verfahren zum Vorhersagen des Zeitverlaufs einer Vielzahl von Daten bezüglich einer Telefonieinfrastruktur zur Netzwerkfunktionsvirtualisierung, wobei das Verfahren die Schritte umfasst zum: - Bereitstellen (1) einer ersten Datenbank, die historische Telefonieinfrastruktur-Überwachungsdaten enthält, die den Nutzungsgrad von Telefonieinfrastrukturressourcen und/oder jegliche Fehlerbedingungen oder Anomalien, die darin aufgetreten sind, enthält;
- Bereitstellen (2) einer zweiten Datenbank, die historische Telefonieinfrastrukturanwendungs-Überwachungsdaten, die den Nutzungsgrad der Telefonieinfrastrukturanwendungen, ihre Leistung oder Zuverlässigkeit und/oder jegliche Fehlerbedingungen oder Anomalien, die darin aufgetreten sind, enthält;
- Bereitstellen (3) einer Steuereinheit in Signalkommunikation mit der ersten und der zweiten Datenbank;
- Bereitstellen (4) eines automatischen Lernmechanismus;
- Extrapolieren (5) durch die Steuereinheit mindestens einer ersten Teilmenge historischer Daten aus den historischen Telefonieinfrastruktur-Überwachungsdaten und/oder aus den historischen Telefonieinfrastrukturanwendungs-Überwachungsdaten, wobei die erste Teilmenge historischer Daten ein vorbestimmtes Zeitfenster betrifft;
- Extrapolieren (6) durch die Steuereinheit mindestens einer zweiten Teilmenge historischer Daten aus den historischen Telefonieinfrastruktur-Überwachungsdaten und/oder aus den historischen Telefonieinfrastrukturanwendungs-Überwachungsdaten, wobei die zweite Teilmenge historischer Daten das vorbestimmte zweite Zeitfenster betrifft;
- Definieren (7) durch die Steuereinheit eines historischen Eingabevektors, der die historischen Daten der ersten Teilmenge historischer Daten umfasst;
- Definieren (8) durch die Steuereinheit mindestens eines historischen Ausgabevektors, der die historischen Daten der zweiten Teilmenge historischer Daten umfasst;
- Trainieren (9) durch die Steuereinheit des automatischen Lernmechanismus, um an seinem Ausgang den historischen Ausgabevektor durch Bereitstellen des historischen Eingabevektors an dem Eingang des automatischen Lernmechanismus zu erhalten;
- Erheben (10) durch die Steuereinheit mindestens einer Teilmenge der aktuellen Telefonieinfrastruktur-Überwachungsdaten und/oder Telefonieinfrastrukturanwendungs-Überwachungsdaten, wobei die aktuellen Daten ein aktuelles Zeitfenster betreffen;
- Definieren (11) eines aktuellen Eingabevektors, der die Teilmenge aktueller Daten umfasst;
- Bereitstellen (12) des aktuellen Eingabevektors an dem Eingang des trainierten automatischen Lernmechanismus, um einen Vorhersageausgabevektor zu erhalten; wobei das Verfahren **dadurch gekennzeichnet ist, dass** der Schritt des Extrapolierens (5) durch die Steuereinheit mindestens einer ersten Teilmenge historischer Daten und der Schritt des Extrapolierens (6) durch die Steuereinheit mindestens einer zweiten Teilmenge historischer Daten die Teilmengen umfasst von:
- Anwenden eines Datenauswahlalgorithmus, um mindestens eine erste und/oder mindestens eine zweite optimale Teilmenge historischer Daten zu identifizieren, die dem automatischen Lernmechanismus bereitgestellt werden sollen;
- Anwenden mindestens einer algebraischen Transformationsoperation an die historischen Daten der ersten und/oder zweiten Teilmenge historischer Daten;
- wobei der Teilschritt des Anwendens eines Datenauswahlalgorithmus zum Identifizieren mindestens einer ersten und/oder mindestens einer zweiten optimalen Teilmenge historischer Daten, die dem automatischen Lernmechanismus bereitgestellt werden sollen, Folgendes umfasst:
- den Teilschritt:
- Anwenden eines Algorithmus vom genetischen Typ durch die Steuereinheit, um mindestens eine erste und/oder mindestens eine zweite optimale Teilmenge historischer Daten zu identifizieren, die dem automatischen Lernmechanismus bereitgestellt werden sollen; oder
- die folgenden Teilschritte:
- Definieren durch die Steuereinheit einer vorbestimmten Anzahl von Iterationen;
- Wiederholen durch die Steuereinheit eines Algorithmus vom genetischen Typ für die vorbestimmte Anzahl von Iterationen, um eine erste und/oder eine zweite optimale Teilmenge historischer
Daten für jede Iteration zu identifizieren;
- Auswählen mindestens einer ersten und/oder mindestens einer zweiten Teilmenge historischer Daten aus den Teilmengen historischer Daten, die im vorherigen Schritt identifiziert wurden.

2. Verfahren nach Anspruch 1, wobei der Schritt des Extrapolierens (6) durch die Steuereinheit mindestens einer zweiten Teilmenge historischer Daten der historischen Telefoninfrastruktur-Überwachungsdaten und/oder der historischen Telefoninfrastrukturanwendungs-Überwachungsdaten den folgenden Schritt umfasst:
- Auswählen durch die Steuereinheit einer zweiten Teilmenge historischer Daten in Bezug auf das zweite vorbestimmte Zeitfenster, wobei das zweite vorbestimmte Zeitfenster von dem ersten vorbestimmten Zeitfenster verschieden ist.

3. Verfahren nach Anspruch 1, wobei der Schritt des Extrapolierens (6) durch die Steuereinheit mindestens einer zweiten Teilmenge historischer Daten aus den historischen Telefonieinfrastruktur-Überwachungsdaten und/oder aus den historischen Telefonieinfrastrukturanwendungs-Überwachungsdaten den folgenden Schritt umfasst:
- Auswählen durch die Steuereinheit einer zweiten Teilmenge historischer Daten in Bezug auf das zweite vorbestimmte Zeitfenster, wobei das zweite vorbestimmte Zeitfenster das erste vorbestimmte Zeitfenster mindestens teilweise überlappt.

4. Verfahren nach einem der Ansprüche 1 bis 3, wobei das Verfahren vor dem Schritt des Definierens (7) durch die Steuereinheit eines historischen Eingabevektors und vor dem Schritt des Definierens (8) durch die Steuereinheit eines historischen Ausgabevektors die folgenden Schritte umfasst:
- Definieren durch die Steuereinheit eines ersten Zeitintervalls für die Erhebung der historischen Telefonieinfrastruktur-Überwachungsdaten der ersten und der zweiten Teilmenge historischer Daten;
- Definieren durch die Steuereinheit eines zweiten Zeitintervalls für die Erhebung der historischen Telefonieinfrastrukturanwendungs-Überwachungsdaten der ersten und der zweiten Teilmenge historischer Daten;
- Definieren durch die Steuereinheit des maximalen Erhebungszeitintervalls zwischen dem ersten und dem zweiten Erhebungszeitintervall;
- Aggregieren der historischen Daten der ersten und der zweiten Teilmenge historischer Daten basierend auf dem maximalen Erhebungszeitintervall, um aggregierte historische Daten zu erhalten.

5. Verfahren nach Anspruch 4, wobei der Schritt des Aggregierens der Daten der ersten und der zweiten Teilmenge historischer Daten basierend auf dem maximalen Erhebungszeitintervall zum Erhalten aggregierter historischer Daten die Teilschritte umfasst zum
- Identifizieren durch die Steuereinheit einer Vielzahl erster Zeitpunkte in dem ersten vorbestimmten Zeitfenster, wobei die ersten Zeitpunkte von dem Wert des maximalen Erhebungszeitintervalls beabstandet sind;
- Identifizieren einer Vielzahl zweiter Zeitpunkte in dem vorbestimmten Zeitfenster durch die Steuereinheit, wobei die zweiten Zeitpunkte von dem Wert des maximalen Erhebungszeitintervalls beabstandet sind;
- Assoziieren durch die Steuereinheit jedes historischen Datums der ersten Teilmenge historischer Daten mit einem jeweiligen ersten Zeitpunkt, und jedes historischen Datums der zweiten Teilmenge historischer Daten mit einem jeweiligen zweiten Zeitpunkt, um aggregierte historische Daten zu definieren.

6. Verfahren nach einem der Ansprüche 4 bis 5, wobei das Verfahren vor dem Schritt des Definierens (7) durch die Steuereinheit eines historischen Eingabevektors und vor dem Schritt des Definierens (8) durch die Steuereinheit eines historischen Ausgabevektors die Schritte umfasst zum
- Definieren eines maximalen Zeitfensters durch die Steuereinheit;
- Definieren durch die Steuereinheit für jedes Paar aufeinanderfolgender aggregierter historischer Daten der ersten Teilmenge historischer Daten eines ersten Trennungszeitfensters, wobei das Trennungszeitfenster zwischen den ersten Zeitpunkten, die mit den aggregierter historischen Daten des Paares aufeinanderfolgender aggregierter historischer Daten der ersten Teilmenge historischer Daten assoziiert sind, beinhaltet ist;
- Definieren durch die Steuereinheit für jedes Paar aufeinanderfolgender aggregierter historischer Daten der zweiten Teilmenge historischer Daten eines zweiten Trennungszeitfensters, wobei das zweite Trennungszeitfenster zwischen den zweiten Zeitpunkten, die zwischen den zweiten Zeitpunkten, die mit den historischen Daten des Paares aufeinanderfolgender aggregierter historischer Daten der zweiten Teilmenge historischer Daten assoziiert ist, beinhaltet ist;
- Überprüfen durch die Steuereinheit für jedes des definierten ersten und zweiten Trennungszeitfensters, ob die Dauer eines derartigen Trennungszeitfensters mindestens gleich oder größer als der maximale Zeitfensterwert ist;
- Definieren durch die Steuereinheit eines ersten zuverlässigen Zeitfensters durch Ausschließen aus dem ersten vorbestimmten Zeitfenster jedes ersten Trennungszeitfensters, dessen Dauer mindestens gleich oder größer als der maximale Zeitfensterwert ist;
- Definieren durch die Steuereinheit eines zweiten zuverlässigen Zeitfensters durch Ausschließen aus dem zweiten vorbestimmten Zeitfenster jedes zweiten Trennungszeitfensters, dessen Dauer mindestens gleich oder größer als der maximale Zeitfensterwert ist.

7. Verfahren nach Anspruch 6, wobei das Verfahren vor dem Schritt des Definierens (7) durch die Steuereinheit eines historischen Eingabevektors und vor dem Schritt des Definierens (8) durch die Steuereinheit eines historischen Ausgabevektors die Schritte umfasst zum
- Überprüfen durch die Steuereinheit, ob jedes erste Trennungszeitfenster des ersten zuverlässigen Zeitfensters einen oder mehrere Zeitpunkte umfasst, die keine aggregierten historischen Daten der
ersten Teilmenge historischer Daten, die damit assoziiert sind, aufweisen;
- Überprüfen durch die Steuereinheit, ob jedes zweite Trennungszeitfenster des zuverlässigen Zeitfensters einen oder mehrere Zeitpunkte umfasst, die keine aggregierten historischen Daten der zweiten Teilmenge historischer Daten, die damit assoziiert sind, aufweisen;
- Interpolieren durch die Steuereinheit der aggregierten historischen Daten der ersten Teilmenge historischer Daten, um ein erstes interpoliertes Datum zu definieren, das mit jedem ersten Zeitpunkt des ersten zuverlässigen Zeitfensters assoziiert werden soll, mit dem keine aggregierten historischen Daten der ersten Teilmenge historischer Daten assoziiert sind;
- Interpolieren durch die Steuereinheit der aggregierten historischen Daten der zweiten Teilmenge historischer Daten, um ein zweites interpoliertes Datum zu definieren, das mit jedem zweiten Zeitpunkt des zweiten zuverlässigen Zeitfensters assoziiert werden soll, mit dem keine aggregierten historischen Daten der zweiten Teilmenge historischer Daten assoziiert sind.

8. Verfahren nach einem der Ansprüche 4 bis 7, wobei das Verfahren vor dem Schritt des Definierens (7) durch die Steuereinheit eines historischen Eingabevektors und vor dem Schritt des Definierens (8) durch die Steuereinheit eines historischen Ausgabevektors die Schritte umfasst zum
- Normieren durch die Steuereinheit der aggregierten historischen Daten der ersten und der zweiten Teilmenge historischer Daten.

9. Verfahren nach einem der Ansprüche 1 bis 8, wobei der Schritt des Extrapolierens (10) durch die Steuereinheit mindestens einer Teilmenge historischer Daten aus aktuellen Telefonieinfrastruktur-Überwachungsdaten und/oder Telefonieinfrastrukturanwendungs-Überwachungsdaten die Teilschritte umfasst zum
- Anwenden des Datenauswahlalgorithmus, um eine optimale Teilmenge aktueller Daten zu identifizieren, die dem automatischen Lernmechanismus bereitgestellt werden soll;
- Anwenden mindestens einer algebraischen Transformationsoperation an die aktuellen Daten der Teilmenge aktueller Daten.

## Revendications

1. Procédé de prédiction de l'évolution temporelle d'une pluralité de données par rapport à une infrastructure de téléphonie pour la virtualisation de fonctions de réseau, ledit procédé comprenant les étapes consistant à : - fournir (1) une première base de données contenant des données historiques de surveillance d'infrastructure de téléphonie concernant le niveau d'utilisation des ressources d'infrastructure de téléphonie et/ou une quelconque condition d'erreur ou anomalie survenue dans celle-ci ;
- fournir (2) une deuxième base de données contenant des données historiques de surveillance d'application d'infrastructure de téléphonie concernant le niveau d'utilisation de l'application d'infrastructure de téléphonie, sa performance ou fiabilité et/ou une quelconque condition d'erreur ou anomalie survenue dans celle-ci ;
- fournir (3) une unité de commande en communication de signal avec la première et la deuxième base de données ;
- fournir (4) un mécanisme d'apprentissage automatique ;
- extrapoler (5), par l'unité de commande, au moins un premier sous-ensemble de données historiques à partir desdites données historiques de surveillance d'infrastructure de téléphonie et/ou desdites données historiques de surveillance d'application d'infrastructure de téléphonie, ledit premier sous-ensemble de données historiques étant par rapport à une première fenêtre temporelle prédéterminée ;
- extrapoler (6), par l'unité de commande, au moins un deuxième sous-ensemble de données historiques à partir desdites données historiques de surveillance d'infrastructure de téléphonie et/ou desdites données historiques de surveillance d'application d'infrastructure de téléphonie, ledit deuxième sous-ensemble de données historiques étant par rapport à une deuxième fenêtre temporelle prédéterminée ;
- définir (7), par l'unité de commande, un vecteur d'entrée historique comprenant les données historiques du premier sous-ensemble de données historiques ;
- définir (8), par l'unité de commande, un vecteur de sortie historique comprenant les données historiques du deuxième sous-ensemble de données historiques ;
- instruire (9), par l'unité de commande, le mécanisme d'apprentissage automatique pour obtenir, à sa sortie, le vecteur de sortie historique en fournissant le vecteur d'entrée historique à l'entrée du
mécanisme d'apprentissage automatique ;
- acquérir (10), par l'unité de commande, au moins un sous-ensemble de données courantes de surveillance d'infrastructure de téléphonie et/ou de données courantes de surveillance d'application d'infrastructure de téléphonie, lesdites données courantes étant par rapport à une fenêtre temporelle courante ;
- définir (11) un vecteur d'entrée courant comprenant ledit sous-ensemble de données courantes ;
- fournir (12) le vecteur d'entrée courant à l'entrée du mécanisme d'apprentissage automatique instruit pour obtenir un vecteur de sortie de prédiction ;
ledit procédé étant **caractérisé en ce que** l'étape consistant à extrapoler (5), par l'unité de commande, au moins un premier sous-ensemble de données historiques et l'étape consistant à extrapoler (6), par l'unité de commande, au moins un deuxième sous-ensemble de données historiques comprend les sous-ensembles consistant à :
- appliquer un algorithme de sélection de données pour identifier au moins un premier et/ou au moins un deuxième sous-ensemble optimal de données historiques à fournir au mécanisme d'apprentissage automatique ;
- appliquer au moins une opération de transformation algébrique aux données historiques du premier et/ou du deuxième sous-ensemble de données historiques ;
- dans lequel la sous-étape consistant à appliquer un algorithme de sélection de données pour identifier au moins un premier et/ou au moins un deuxième sous-ensemble optimal de données historiques à fournir au mécanisme d'apprentissage automatique comprend :
- la sous-étape consistant à :
- appliquer, par l'unité de commande, un algorithme de type génétique pour identifier au moins un premier et/ou au moins un deuxième sous-ensemble optimal de données historiques à fournir au mécanisme d'apprentissage automatique ; ou
- les sous-étapes consistant à :
- définir, par l'unité de commande, un nombre prédéterminé d'itérations ;
- répéter, par l'unité de commande, un algorithme de type génétique pour le nombre prédéterminé d'itérations, afin d'identifier un premier et/ou un deuxième sous-ensemble optimal de données historiques pour chaque itération ;
- sélectionner au moins un premier et/ou au moins un deuxième sous-ensemble de données historiques parmi les sous-ensembles de données historiques identifiés à l'étape précédente.

2. Procédé selon la revendication 1, dans lequel l'étape consistant à extrapoler (6), par l'unité de commande, au moins un deuxième sous-ensemble de données historiques à partir desdites données historiques de surveillance d'infrastructure de téléphonie et/ou desdites données historiques de surveillance d'application d'infrastructure de téléphonie comprend l'étape consistant à :
- sélectionner, par l'unité de commande, un deuxième sous-ensemble de données historiques par rapport à la deuxième fenêtre temporelle prédéterminée, ladite deuxième fenêtre temporelle prédéterminée étant distincte de la première fenêtre temporelle prédéterminée.

3. Procédé selon la revendication 1, dans lequel l'étape consistant à extrapoler (6), par l'unité de commande, au moins un deuxième sous-ensemble de données historiques à partir desdites données historiques de surveillance d'infrastructure de téléphonie et/ou desdites données historiques de surveillance d'application d'infrastructure de téléphonie comprend l'étape consistant à :
- sélectionner, par l'unité de commande, un deuxième sous-ensemble de données historiques par rapport à la deuxième fenêtre temporelle prédéterminée, ladite deuxième fenêtre temporelle prédéterminée se superposant au moins partiellement à la première fenêtre temporelle prédéterminée.

4. Procédé selon l'une quelconque des revendications 1 à 3, dans lequel, avant l'étape consistant à définir (7), par l'unité de commande, un vecteur d'entrée historique et avant l'étape consistant à définir (8), par l'unité de commande, un vecteur de sortie historique, ledit procédé comprend les étapes consistant à :
- définir, par l'unité de commande, un premier intervalle de temps pour l'acquisition des données historiques de surveillance d'infrastructure de téléphonie du premier et deuxième sous-ensembles de données historiques ;
- définir, par l'unité de commande, un deuxième intervalle de temps pour l'acquisition des données historiques de surveillance d'application d'infrastructure de téléphonie du premier et deuxième sous-ensembles de données historiques ;
- définir, par l'unité de commande, l'intervalle de temps d'acquisition maximal entre les premier et deuxième intervalles de temps d'acquisition ;
- agréger les données historiques des premier et deuxième sous-ensembles de données historiques sur la base de l'intervalle de temps d'acquisition maximal pour obtenir des données historiques agrégées.

5. Procédé selon la revendication 4, dans lequel l'étape consistant à agréger les données historiques des premier et deuxième sous-ensembles de données historiques, sur la base de l'intervalle de temps d'acquisition maximal pour obtenir des données historiques agrégées comprend les sous-étapes consistant à :
- identifier, par l'unité de commande, une pluralité de premiers points temporels dans la première fenêtre temporelle prédéterminée, lesdits premiers points temporels étant espacés de la valeur de l'intervalle temporel d'acquisition maximal ;
- identifier, par l'unité de commande, une pluralité de deuxièmes points temporels dans la deuxième fenêtre temporelle prédéterminée, lesdits deuxièmes points temporels étant espacés de la valeur de l'intervalle temporel d'acquisition maximal ;
- associer, par l'unité de commande, chaque donnée historique du premier sous-ensemble de données historiques à un premier point temporel respectif et chaque donnée historique du deuxième sous-ensemble de données historiques à un deuxième point temporel respectif pour définir des données historiques agrégées.

6. Procédé selon la revendication 4 ou 5, dans lequel, avant l'étape consistant à définir (7), par l'unité de commande, un vecteur d'entrée historique et avant l'étape consistant à définir (8), par l'unité de commande, un vecteur de sortie historique, ledit procédé comprend les étapes consistant à
- définir, par l'unité de commande, une fenêtre temporelle maximale ;
- définir, par l'unité de commande, pour chaque paire de données historiques agrégées consécutives du premier sous-ensemble de données historiques, une première fenêtre temporelle de séparation, ladite première fenêtre temporelle de séparation étant comprise entre les premiers points temporels associés aux données historiques agrégées de la paire de données historiques agrégées consécutives du premier sous-ensemble de données historiques ;
- définir, par l'unité de commande, pour chaque paire de données historiques agrégées consécutives du deuxième sous-ensembles de données historiques, une deuxième fenêtre temporelle de séparation, ladite deuxième fenêtre temporelle de séparation étant comprise entre les deuxièmes points temporels associés aux données historiques agrégées de la paire de données historiques agrégées consécutives du deuxième sous-ensembles de données historiques ;
- vérifier, par l'unité de commande, pour chacune de la première et deuxième fenêtre temporelle de séparation définies, si la durée de telle fenêtre temporelle de séparation est au moins égale ou supérieure à la valeur maximale de fenêtre temporelle
- définir, par l'unité de commande, une première fenêtre temporelle fiable en excluant de la première fenêtre temporelle prédéterminée chaque première fenêtre temporelle de séparation dont la durée est au moins égale ou supérieure à la valeur maximale de fenêtre temporelle ;
- définir, par l'unité de commande, une deuxième fenêtre temporelle fiable en excluant de la deuxième fenêtre temporelle prédéterminée chaque deuxième fenêtre temporelle de séparation dont la durée est au moins égale ou supérieure à la valeur maximale de fenêtre temporelle.

7. Procédé selon la revendication 6, dans lequel, avant l'étape consistant à définir (7), par l'unité de commande, un vecteur d'entrée historique et avant l'étape consistant à définir (8), par l'unité de commande, un vecteur de sortie historique, ledit procédé comprend les étapes consistant à
- vérifier, par l'unité de commande, si chaque première fenêtre temporelle de séparation de la première fenêtre temporelle fiable comprend un ou plusieurs premiers points temporels n'ayant pas de données historiques agrégées du premier sous-ensemble de données historiques qui lui sont associées ;
- vérifier, par l'unité de commande, si chaque deuxième fenêtre temporelle de séparation de la deuxième fenêtre temporelle fiable comprend un ou plusieurs deuxièmes points temporels n'ayant pas de données historiques agrégées du deuxième sous-ensemble de données historiques qui lui sont associées ;
- interpoler, par l'unité de commande, les données historiques agrégées du premier sous-ensemble de données historiques pour définir des premières données interpolées à associer à chaque premier point temporel de la première fenêtre temporelle fiable n'ayant pas de données historiques agrégées du premier sous-ensemble de données historiques qui lui sont associées.
- interpoler, par l'unité de commande, les données historiques agrégées du deuxième sous-ensemble de données historiques pour définir des deuxièmes données interpolées à associer à chaque deuxième point temporel de la deuxième fenêtre temporelle fiable n'ayant pas de données historiques agrégées du deuxième sous-ensemble de données historiques qui lui sont associées.

8. Procédé selon l'une quelconque des revendications 4 à 7, dans lequel, avant l'étape consistant à définir (7), par l'unité de commande, un vecteur d'entrée historique et avant l'étape consistant à définir (8), par l'unité de commande, un vecteur de sortie historique, ledit procédé comprend l'étape consistant à
- normaliser, par l'unité de commande, les données historiques agrégées des premier et deuxième sous-ensembles de données historiques.

9. Procédé selon l'une quelconque des revendications 1 à 8, dans lequel l'étape consistant à acquérir (10), par l'unité de commande, au moins un sous-ensemble de données courantes de surveillance d'infrastructure de téléphonie et/ou de données courantes de surveillance d'application d'infrastructure de téléphonie comprend les sous-étapes consistant à :
- appliquer l'algorithme de sélection de données pour identifier un sous-ensemble optimal de données courantes à fournir au mécanisme d'apprentissage automatique ;
- appliquer au moins une opération de transformation algébrique aux données courantes du sous-ensemble de données courantes.
